# EUROPEAN PATENT APPLICATION

(11) **EP 4 810 840 A1**
(43) Date of publication of application: **23.09.2026**
(21) Application number: 24891086.1
(22) Date of filing: 24.09.2024
(51) Int. Cl.: F16K 31/04

(54) **MOTORIZED VALVE**

(30) Priority: 17.11.2023 JP 2023195708
(71) Applicant: Fujikoki Corporation, Tokyo 158-0082 (JP)
(72) Inventor: HAYAKAWA Junya, Tokyo 158-0082 (JP); ARAI Yusuke, Tokyo 158-0082 (JP); YOSHIDA Tatsuya, Tokyo 158-0082 (JP); MATSUBARA Yuta, Tokyo 158-0082 (JP)
(74) Representative: Ter Meer Steinmeister & Partner
(86) International application number: PCT/JP2024/033845
(87) International publication number: WO 2025/105044

(57) **Abstract**

An electrically operated valve includes a valve main body having a valve chamber communicating with inflow and outflow passages inside, a valve body moving forward and backward with respect to a valve seat, a can accommodating a rotor included in an electric motor driving the valve body, and a connection member connecting the can and the valve main body. The valve main body has a connection opening fitting the connection member. The connection opening has a step part butting against the connection member. The connection member has a tubular fitting part fitted to the connection opening, and a flange part bending toward the connection member center from the fitting part bottom. The fitting part has a male screw screwed into a female screw in the connection opening. A base end part of the flange part butts against the step part when the fitting part is fitted to the connection opening.

## Description

### TECHNICAL FIELD

The present invention relates to an electrically operated valve, and more particularly relates to the structure of a connection member which connects a valve main body and a can (a closed container accommodating a rotor of an electric motor).

### BACKGROUND ART

An electrically operated valve controlling an opening degree of a valve with the use of an electric motor such as a stepping motor has been conventionally used in a refrigeration cycle apparatus which is provided with a refrigerant circuit such as an air conditioner and a refrigerating and freezing device.

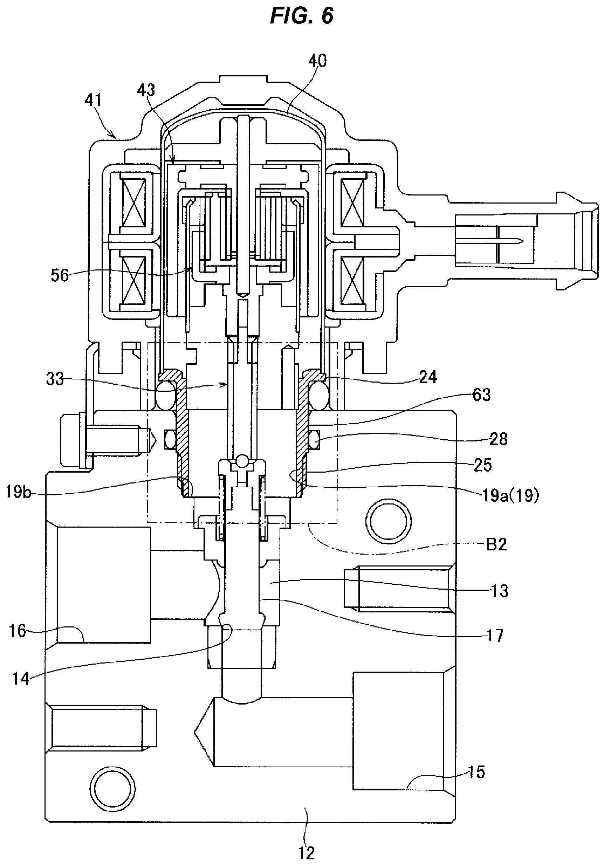

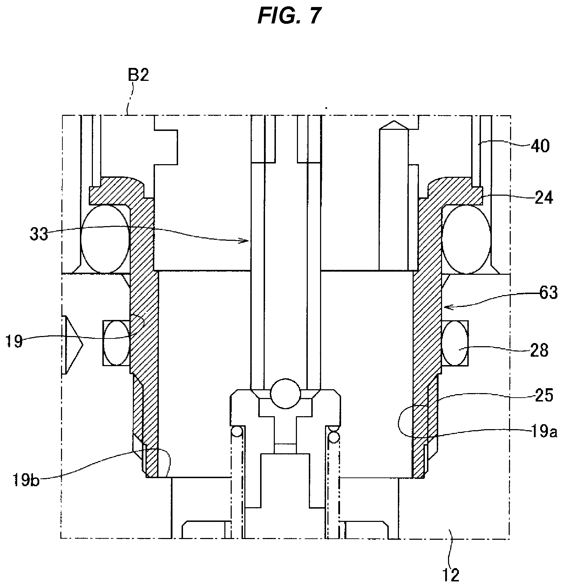

Figs. 6 and 7 show an example of the electrically operated valve as mentioned above (Fig. 7 is an enlarged view of a portion B2 in Fig. 6). As shown in these drawings, the conventional electrically operated valve is provided with a valve main body 12 which has a valve chamber 13 in an inner part thereof and has flow passages (an inflow passage 15 and an outflow passage 16) allowing the refrigerant to flow into and out of the valve chamber 13, a valve seat 14 which is formed in an opening part of the inflow passage 15 to the valve chamber 13, a valve body 17 which changes an amount (flow rate) of the passing refrigerant by moving forward and backward (moving up and down) with respect to the valve seat 14, an electric motor 41 which drives the valve body 17, a speed reduction mechanism 56 which reduces the rotation of the electric motor 41, a transmission mechanism 33 which converts the reduced rotating motion into a linear motion to transmit to the valve body 17, a can (a sealed container) 40 which forms a sealed space in an upper part of a top surface of the valve main body 12 and accommodates a rotor 43 of the electric motor 41, the speed reduction mechanism 56 and the transmission mechanism 33 in the closed space, and a connection member 63 which connects the valve main body 12 and the can 40.

The connection member 63 is a tubular member which is not bottomed and not covered (is opened in both of a top surface and a bottom surface) and has a male screw 25 in an outer peripheral surface. On the contrary, a connection opening 19 for fitting the connection member 63 is pierced in a top surface of the valve main body 12, and a female screw 19a screwing into the male screw 25 of the connection member 63 is formed in an inner peripheral surface of the connection opening 19. Further, the connection opening 19 is provided in a bottom surface part thereof with a step part 19b against which the connection member 63 can be butted when fitting the connection member 63. The connection member 63 is attached to the valve main body 12 by screwing the connection member 63 into the connection opening 19 until a bottom part of the connection member 63 butts against the step part 19b to fasten.

Further, in order to prevent the refrigerant from leaking out to the external part through the connection opening 19 which is communicated with the valve chamber 13, a seal member (O-ring) 28 is disposed within the connection opening 19 in such a manner as to be interposed between an outer peripheral surface of the connection member 63 and the valve main body 12 (an inner peripheral surface of the connection opening 19). Further, a protruding part 24 horizontally protruding outward is formed in a top surface part of the connection member 63, and the can 40 is joined by welding to the protruding part 24.

Further, the following patent literature 1 is provided as a literature which discloses the electrically operated valve as mentioned above.

### CITATION LIST

### PATENT LITERATURE

Patent Literature 1: Japanese Unexamined Patent Application Publication No. 2021-110409

### SUMMARY OF INVENTION

In the meantime, there is still room for improvement in the connection member 63 of the conventional electrically operated valve.

In particular, the connection member 63 is attached by being screwed into the connection opening 19 of the valve main body 12 as mentioned above. However, in a case where the excessive amount of torque is applied to the connection member 63 when performing a fastening work of the connection member 63, the connection member 63 may be deformed by an axial force (a force in an axial direction) or a screw part (the male screw 25 formed in the outer peripheral surface) may be damaged.

Due to the deformation and the damage as mentioned above, the durability of the electrically operated valve may be deteriorated since the connection strength of the connection member 63 to the valve main body 12 is lowered, or the refrigerant leakage may be generated since the sealing performance achieved by the seal member 28 is lowered.

Further, the problem as mentioned above cannot be solved even by the invention described in the above-described patent literature 1.

Therefore, an object of the present invention is to provide a structure of a new connection member in which a member deformation and a screw part damage are not generated even in a case where an excessive amount of torque is applied to the connection member when attaching the connection member.

In order to solve the problem and achieve the object, an electrically operated valve according to the present invention is an electrically operated valve provided with a valve main body which has a valve chamber communicating with an inflow passage and an outflow passage in an inner part thereof, a valve body which moves forward and backward with respect to a valve seat formed within the valve chamber, a can which rotatably accommodates a rotor included in an electric motor driving the valve body, and a connection member which connects the can and the valve main body. Further, the valve main body has in a top surface thereof a connection opening which allows the connection member to be fitted. Further, the connection opening has in a bottom part thereof a step part which allows the connection member to be butted against when the connection member is fitted to the connection opening. Further, the connection member has a tubular fitting part which is fitted to the connection opening, and a flange part which is formed in such a manner as to bend toward the center of the connection member from a bottom end part of the fitting part. Further, the fitting part has in an outer peripheral surface thereof a male screw which is screwed into a female screw formed in an inner peripheral surface of the connection opening, so that a base end part of the flange part butts against the step part when the fitting part is fitted to the connection opening.

The term "base end part" is a portion which is positioned in the outermost position in the flange part, in other words, a portion which is the farthest from the center axis line (the center axis) of the connection member, and a portion which is connected (adjacent) to the tubular fitting part. In other words, the term "base end part" is a portion which is the nearest to the fitting part (a portion which is positioned approximately just below the fitting part) as seen from the axis line (the center axis line) of the connection member.

Further, the electrically operated valve is typically provided within the connection opening with a ring-shaped seal member in such a manner as to be interposed between the fitting part and the valve main body.

In the conventional electrically operated valve (Figs. 6 and 7), the connection member (in particular, the fitting part fitted to the connection opening) has a simple cylindrical shape, and is configured to butt the lower end thereof against the step part formed in the connection opening.

On the contrary, in the electrically operated valve according to the present invention, the structure is made such that the flange part is provided in the bottom end part of the connection member (the fitting part), and the base end part (the boundary part to the fitting part) of the flange part comes into contact with the step part of the connection opening when the connection member is screwed into the connection opening. Thus, even when the connection member is fastened by the excessive amount of torque, the axial force (the force in the axial direction) and the deformation can be released to the leading end side of the flange part (the side closer to the center axis of the connection member) from the fitting part which the male screw is formed in and the seal member is brought into contact with, so that it is possible to avoid or suppress the deformation of the connection member (the fitting part) or the damage in the screw part when assembling the electrically operated valve (when attaching the connection member).

Further, according to a preferable aspect of the present invention, the female screw is formed at a position which is farther from the bottom part of the connection opening than the seal member, with regard to a depth direction of the connection opening, and the male screw is arranged at a position which is farther from the bottom part of the connection opening than the seal member when the fitting part is fitted to the connection opening.

According to the aspect mentioned above, when the connection member (the fitting part) is inserted into the connection opening of the valve main body to be screwed thereinto, the male screw does not pass through the position in which the seal member is arranged within the connection opening (in a case where a positional relationship between the male screw and the seal member is inverse to the above-mentioned aspect the male screw passes through the arranged position of the seal member when attaching the connection member), so that it is possible to avoid such a possibility that the seal member is injured by the male screw formed in the outer peripheral surface of the connection member when attaching the connection member.

Further, in the present invention, the connection member may be constructed by a pressed component (a component formed by the press working) which is advantageous in cost.

According to the present invention, even in a case where the excessive amount of torque is applied to the connection member when the attaching work of the connection member is performed, it is possible to prevent or inhibit the member deformation and the damage of the screw part from being generated.

The other objects, features and advantages of the present invention are apparent from the following description of embodiments according to the present invention which is given on the basis of the accompanying drawings. It is apparent for a person skilled in the art that the present invention is not limited to the following embodiments but can be variously changed within the scope of the invention described in claims. Further, in each of the drawings, same reference numerals denote the same or corresponding portions.

### BRIEF DESCRIPTION OF DRAWINGS

[Fig. 1] Fig. 1 is a vertical cross sectional view showing an electrically operated valve (in a valve closed state) according to a first embodiment of the present invention.
[Fig. 2] Fig. 2 is a vertical cross sectional view showing a main part (a connection member arranged portion/a portion B in Fig. 1) of the electrically operated valve according to the first embodiment in an enlarged manner.
[Fig. 3] Fig. 3 is a vertical cross sectional view showing the electrically operated valve (in a valve opened state) according to the first embodiment.
[Fig. 4] Fig. 4 is a vertical cross sectional view showing an electrically operated valve (in a valve closed state) according to a second embodiment of the present invention.
[Fig. 5] Fig. 5 is a vertical cross sectional view showing a main part (a connection member arranged portion/a portion B1 in Fig. 4) of the electrically operated valve according to the second embodiment in an enlarged manner.
[Fig. 6] Fig. 6 is a vertical cross sectional view showing an example of the conventional electrically operated valve.
[Fig. 7] Fig. 7 is a vertical cross sectional view showing a main part (a connection member arranged portion/a portion B2 in Fig. 6) of the conventional electrically operated valve in an enlarged manner.

### DESCRIPTION OF EMBODIMENTS

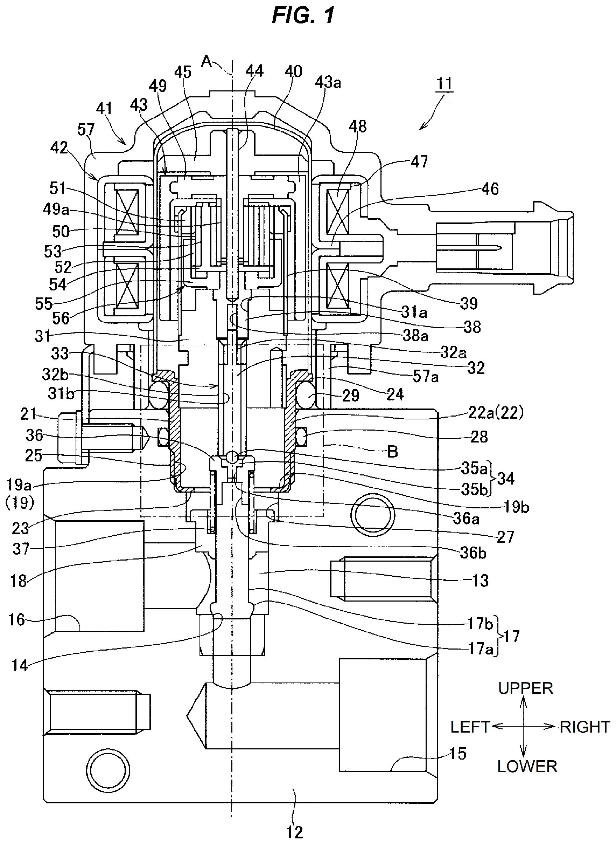

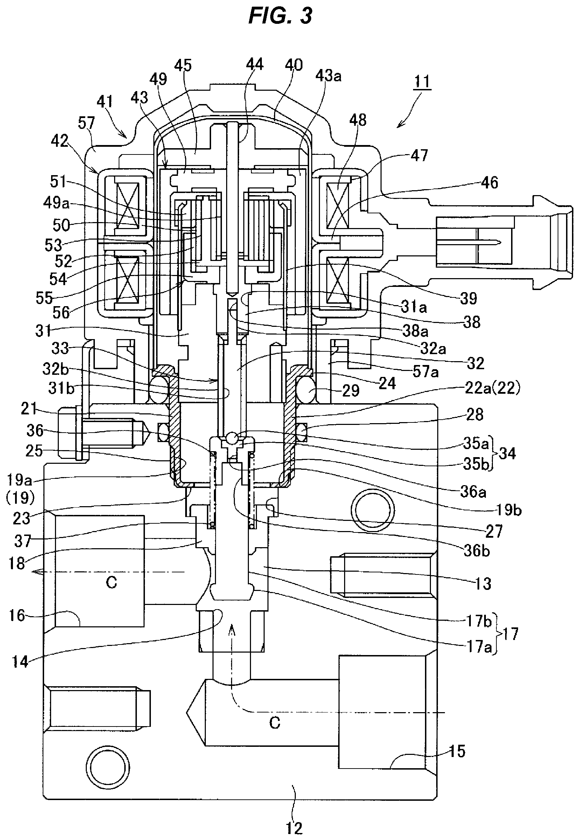

A description will be given of an electrically operated valve according to an embodiment of the present invention with reference to Figs. 1 to 5. Each of the drawings appropriately shows two-dimensional coordinates which represent an up-and-down direction and a lateral direction and are orthogonal to each other, and the following description will be given on the basis of these directions. However, the electrically operated valve according to the present invention and each of the present embodiments can be used in various directions, each of the directions is provided for convenience, and structures of respective parts of the present invention are not limited by these directions. Further, the terms "vertical" and "horizontal" may be used, the vertical direction coincides with the up-and-down direction, and a direction orthogonal to the vertical direction is a horizontal direction including the lateral direction. Further, in each of the drawings, a connection member corresponding to a characteristic portion of the present invention is hatched.

### [First Embodiment]

As shown in Figs. 1 to 3, an electrically operated valve 11 according to a first embodiment of the present invention is provided with a valve main body 12 which has a valve chamber 13 in an inner part and has an inflow passage 15 allowing the refrigerant to flow into the valve chamber 13 and an outflow passage 16 allowing the refrigerant to flow out of the valve chamber 13, a valve seat 14 which is formed in an opening part of the inflow passage 15 to the valve chamber 13, a valve body 17 which changes a passing amount (a flow rate) of the refrigerant by moving forward and backward (moving up and down) with respect to the valve seat 14, a valve body guide member 18 which is disposed in such a manner as to close a top surface of the valve chamber 13 and supports the valve body 17 so as to be movable up and down, an electric motor 41 which drives the valve body 17, a speed reduction mechanism 56 which reduces the rotation of the electric motor 41, a transmission mechanism 33 which converts the reduced rotating motion to a linear motion to transmit to the valve body 17, a can (a sealed container) 40 which is covered and not bottomed (is opened in a bottom surface and is closed in a top surface), has a cylindrical shape, forms a sealed space in an upper part of a top surface of the valve main body 12 and accommodates a rotor 43 of the electric motor 41, the speed reduction mechanism 56 and the transmission mechanism 33 in the closed space, and a connection member 21 which connects the valve main body 12 and the can 40.

The connection member 21 is a not-bottomed and not-covered cylindrical member, and has a cylindrical tubular part 22 which includes a fitting part 22a fitted to a connection opening (mentioned later) 19 of the valve main body 12, a flange part 23 which is formed in such a manner as to horizontally bend inward (in other words, toward a center axis line A of the connection member 21) from a lower end of the tubular part 22, and a protruding part 24 which bends from an upper edge of the tubular part 22 and horizontally expands outward (in other words, to a direction moving away from the center axis line A of the connection member 21). The fitting part 22a has in an outer peripheral surface of the lower part thereof a male screw 25 for connecting to the valve main body 12.

The connection member 21 is formed as a pressed component which is advantageous in a manufacturing cost, and can be manufactured by press molding, thereafter forming the flange part 23 and the protruding part 24 by bending and drawing work and applying a thread cutting work for forming the male screw 25.

On the contrary, the connection opening 19 receiving the fitting part 22a of the connection member 21 is provided in an electric motor placing surface (an upper surface of the valve main body 12 for placing the electric motor 41) in the valve main body 12. A female screw 19a screwing into the male screw 25 of the fitting part 22a is formed in an inner peripheral surface of a lower part in the connection opening 19. Further, a step part 19b against which the fitting part 22a is butted is formed in a bottom part of the connection opening 19. Further, a ring-shaped seal member (O-ring) 28 is disposed in an upper position than the female screw 19a in the inner peripheral surface of the connection opening 19. The seal member 28 is interposed between the valve main body 12 (the inner peripheral surface of the connection opening 19) and the outer peripheral surface of the connection member 21 (the fitting part 22a) and performs a function for preventing the refrigerant from leaking out of the valve chamber 13.

The connection member 21 is attached to the valve main body 12 by inserting the fitting part 22a into the connection opening 19 of the valve main body 12, screwing the male screw 25 in the outer peripheral surface of the fitting part 22a into the female screw 19a in the inner peripheral surface of the connection opening 19 and screwing the fitting part 22a into the connection opening 19. When this attaching work is performed, the base end part of the flange part 23 forming the lower end of the fitting part 22a is stopped by being butted against the step part 19b in the bottom part of the connection opening 19, and the connection member 21 is fixed to the valve main body 12.

Therefore, according to the present embodiment, even if the connection member 21 is fastened by the excessive amount of torque when attaching the connection member 21, the axial force (the force in the axial direction) and the deformation can be released to the leading end side (the side closer to the center axis line A of the connection member 21) of the flange part 23 from the fitting part 22a provided with the male screw 25 and the seal member 28, and it is possible to avoid or suppress the deformation of the fitting part 22a and the damage of the screw part (the male screw 25) when assembling the electrically operated valve 11 (when attaching the connection member 21).

The upper part of the tubular part 22 is in a state of protruding upward from the connection opening 19 when the connection member 21 is attached to the valve main body 12, and a fixed gap is formed between the upper surface of the valve main body 12 and the protruding part 24. The gap is provided with a seal member 29 (mentioned later) which prevents the moisture from infiltrating into the electric motor 41. Further, the can 40 is joined by welding to an outer peripheral part of the upper surface of the connection member 21 (an outer edge part of the protruding part 24).

The electric motor 41 is constructed by a stepping motor including a stator 42 which is arranged in an outer side of the can 40, a rotor 43 which is rotatably arranged in an inner side of the can 40, and a resin molded cover 57 which covers the can 40 and the stator 42. The resin molded cover 57 has in a lower end part thereof a leg part 57a which surrounds the tubular part 22 and the protruding part 24 of the connection member 21 at a fixed interval. Further, a seal member (O-ring) 29 is provided in such a manner as to be interposed in the gap between the upper surface of the valve main body 12 and the protruding part 24 and be interposed between the inner peripheral surface of the led part 57a of the resin molded cover 57 and the outer peripheral surface of the connection member 21 (the tubular part 22). This seal member 29 performs a function for preventing the moisture from infiltrating into the electric motor 41.

The stator 42 arranged in the outer side of the can 40 includes a yoke 46, and a coil 48 in which a winding wire is applied to a bobbin 47. In the meantime, the rotor 43 arranged on the inner side of the can 40 is constructed by integrally connecting a cylindrical rotor member 43a made of a magnetic material (a permanent magnet) and a sun gear member 49 made of a resin material.

A rotor support shaft 44 is inserted into a center part of the sun gear member 49, and an upper part of the rotor support shaft 44 is supported by a support member 45 which is arranged in an inner side of a top part of the can 40.

A sun gear 49a of the sun gear member 49 engages with a plurality of planetary gears 50 which are rotatably supported to a shaft 53 disposed in a carrier 54 mounted on a bottom surface of an output gear 55. An upper part of the planetary gear 50 engages with an annular ring gear (an internal tooth fixing gear) 51 which is attached to an upper part of a cylindrical gear case 39 fixed to an upper part of a screw bearing 31 (mentioned later), and a lower part of the planetary gear 50 engages with an internal tooth gear 52 of the annular output gear 55. The number of teeth of the ring gear 51 and the number of teeth of the internal tooth gear 52 of the output gear 55 are set to be slightly different number of teeth. As a result, the rotating speed of the sun gear 49a is decelerated with a great reduction ratio to be transmitted to the output gear 55. These gear mechanisms (the sun gear 49a, the planetary gear 50, the ring gear 51 and the output gear 55) construct a speed reduction mechanism (a paradox planetary gear speed reduction mechanism) 56 which decelerates the rotation of the stepping motor 41 mentioned above.

The cylindrical screw bearing 31 is fitted and inserted into the upper part within the connection member 21 (the tubular part 22). A feed screw mechanism is provided as the transmission mechanism 33 in an inner part of the screw bearing 31.

The output gear 55 is slidably in contact with the upper surface of the screw bearing 31. Further, an upper part of a stepped cylindrical output shaft 38 is press fitted to the center of the bottom part of the output gear 55, and a lower part of the output shaft 38 is rotatably inserted into a fitting insertion hole 31a which is formed in the center part of the upper surface of the screw bearing 31. Further, a lower end part of the rotor support shaft 44 is fitted to the upper part of the output shaft 38 so as to be relatively rotatable.

A female screw part 31b is formed in a lower part of a center part of the screw bearing 31, and a male screw part 32b formed in an outer peripheral surface of a screw drive member 32 is screwed into the female screw part 31b. The screw bearing 31 (the female screw part 31b) and the screw drive member 32 (the male screw part 32b) construct the transmission mechanism (the feed screw mechanism) 33 which converts the rotating motion supplied from the electric motor 41 via the speed reduction mechanism 56 into the linear motion to the up-and-down direction to transmit to the valve body 17.

Here, the output gear 55 performs a rotating motion at a fixed position in the up-and-down direction without moving up and down, and the rotating motion of the output gear 55 is transmitted to the screw drive member 32 side by inserting a plate-like part 32a disposed in the upper end part of the screw drive member 32 and having a flat driver shape into a fitting groove 38a disposed in the lower end part of the output shaft 38 connected to the output gear 55 and having a slit shape. The plate-like part 32a disposed in the screw drive member 32 slides in the up-and-down direction within the fitting groove 38a of the output shaft 38. As a result, when the output gear 55 (the rotor 43) rotates, the screw drive member 32 linearly moves in the up-and-down direction by the feed screw mechanism 33 despite that the output gear 55 does not move in the up-and-down direction.

The linear motion of the screw drive member 32 is transmitted to the valve body 17 via a ball-like joint 34 which is constructed by a ball 35a and a ball receiving seat 35b, and a spring receiving member 36. The valve body 17 is constructed by a valve body main body part 17a which comes into contact with and separates from the valve seat 14, and a stepped columnar valve body support part 17b which rises upward from a center part of an upper surface of the valve body main body part 17a, and the spring receiving member 36 and the valve body 17 (the valve body support part 17b) are connected by fitting and inserting the upper end part of the valve body support part 17b to a fitting hole (a lower surface fitting hole) which is formed in a center part of a lower surface of the spring receiving member 36. Further, a fitting hole (an upper surface fitting hole) is also provided in a center part of an upper surface of the spring receiving member 36, and the ball receiving seat 35b is fitted into the upper surface fitting hole.

Further, a communication hole 27 is formed between the valve chamber 13 and the connection opening 19 for communicating these elements, thereby allowing the connection opening 19 and the valve chamber 13 to be communicated via the communication hole 27. Further, the valve body guide member 18 is fixed within the communication hole 19, thereby closing the upper surface of the valve chamber 13. A stepped through hole is formed in a center part of the valve body guide member 18 which is fixed to the upper part of the valve chamber 13, the stepped through hole allowing the valve body support part 17b to pass through so as to be slidable up and down and placing a compression coil spring 37 therein. Further, the compression coil spring 37 is disposed between the step part in the upper part of the through hole and the spring receiving member 36. The compression coil spring 37 is configured to energize the valve body 17 to an upper side which is a valve opening direction, and it is possible to more securely perform the valve opening motion by applying an energizing force of the coil spring 37 to the valve body 17 in addition to the drive force of the electric motor 41 when opening the valve.

In the present embodiment, respective center axis lines of the valve body 17, the valve seat 14, the valve body guide member 18, the connection member 21, the screw bearing 31, the screw drive member 32, the output shaft 38, the rotor support shaft 44, and the axis of rotation of the rotor 43 coincide with the axis line A of the electrically operated valve 11 extending vertically in the up-and-down direction.

The operation of the electrically operated valve 11 according to the first embodiment will be described as follows.

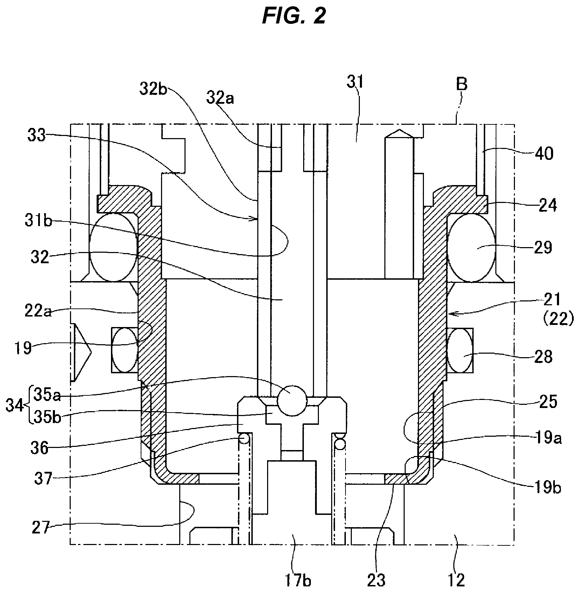

When an electric current is supplied to the stator 42 (the coil 48) in such a manner that the rotor 43 rotates in one direction from the valve closed state shown in Fig. 1, the rotation of the rotor 43 is converted into the linear motion by the feed screw mechanism 33, and the screw drive member 32 is pulled upward. In association therewith, the spring receiving member 36 pressed against the lower surface of the screw drive member 32 via the ball-like joint 34 by the energizing force of the compression coil spring 37, and the valve body support part 17b connected to the spring receiving member 36 are pulled upward, the valve body main body part 17a is separated from the valve seat 14, and the refrigerant flowing into from the inflow passage 15 flows out of the outflow passage 16 through the valve chamber 13 (refer to an arrow C in Fig. 2). The passing amount of the refrigerant (the refrigerant flow rate) in this valve opened state can be adjusted by the amount of rotation of the rotor 43.

On the contrary, when the electric current is supplied to the stator 42 (the coil 48) in such a manner that the rotor 43 rotates in an inverse direction to the one direction from the valve opened state, the rotation of the rotor 43 is converted into the linear motion by the feed screw mechanism 33, and the screw drive member 32 moves downward. In association with this downward moving motion, the ball-like joint 34, the spring receiving member 36 and the valve body 17 move downward. When the valve body main body part 17a comes into contact with the valve seat 14, there is formed the valve closed state (refer to Fig. 1) in which the flow passage between the inflow passage 15 and the outflow passage 16 is blocked.

The electrically operated valve 11 according to the present embodiment can be used in such a manner as to make the flow of the refrigerant inverse to the above, that is, allow the refrigerant to flow into from the outflow hole 16 and to flow out of the inflow hole 15 (which is applied in the same manner to a second embodiment mentioned later).

### [Second Embodiment]

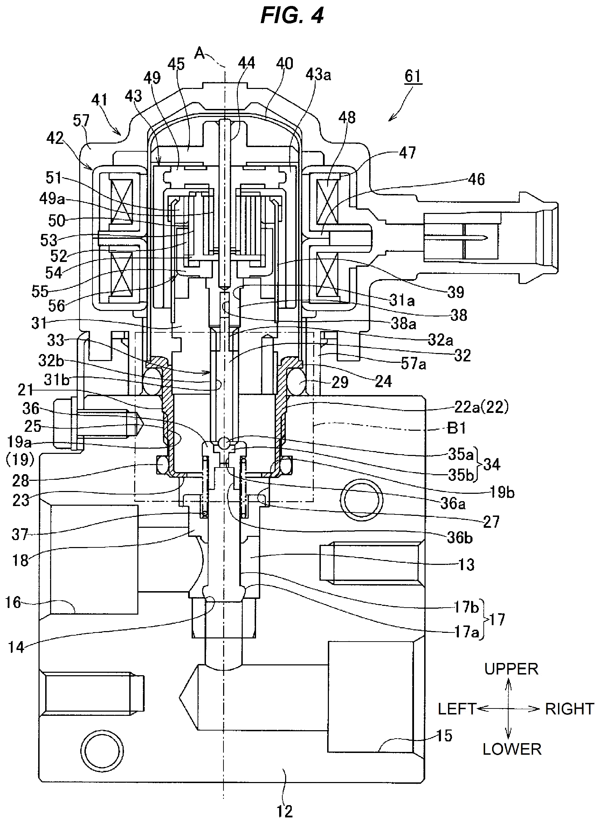

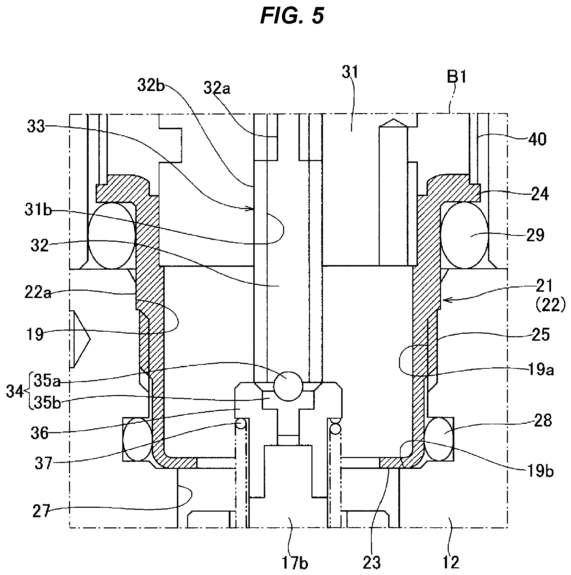

A description will be given of an electrically operated valve according to a second embodiment of the present invention with reference to Figs. 4 and 5. Same reference numerals are attached to the same structures as those of the electrically operated valve according to the first embodiment, an overlapping description will be omitted, and the description is given with a focus on different points.

As shown in Figs. 4 and 5, an electrically operated valve 61 according to the second embodiment of the present invention is provided with the connection member 62 which has the tubular part 22 including the fitting part 22a, the flange part 23 and the protruding part 24, and is provided with the seal member 28 within the connection opening 19 of the valve main body 12, in the same manner as the first embodiment, however, the arrangement of the male screw 25 (and the female screw 19a) and the seal member 28 is set to be inverse to the first embodiment in the up-and-down direction.

More specifically, the seal member 28 is arranged in the upper position of the male screw 25 (and the female screw 19a) in the first embodiment. However, in the present embodiment, the seal member 28 is arranged in a lower position of the male screw 25 (and the female screw 19a) (near the bottom part of the connection opening 19).

According to the arrangement mentioned above, the male screw 25 formed in the outer peripheral surface of the fitting part 22a does not pass through the seal member 28 (the seal member 28 is required to be placed within the connection opening 19 prior to the connection member 62) when the fitting part 22a is inserted into the connection opening 19 and the connection member 62 is attached to the valve main body 12. Therefore, it is possible to prevent the matter that the seal member 28 is scratched by the male screw 25 which is formed in the outer peripheral surface of the connection member 62 when attaching the connection member 62 and the valve leakage is generated from being generated.

### REFERENCE SIGNS LIST

- A: axis line (center axis line)
- C: flow of refrigerant
- 11, 61: electrically operated valve
- 12: valve main body
- 13: valve chamber
- 14: valve seat
- 15: inflow passage
- 16: outflow passage
- 17: valve body
- 17a: valve body main body part
- 17b: valve body support part
- 18: valve body guide member
- 19: connection opening
- 19a: female screw
- 19b: step part
- 21, 62, 63: connection member
- 22: tubular part
- 22a: fitting part
- 23: flange part
- 24: protruding part
- 25: male screw
- 27: communication hole
- 28, 29: seal member
- 31: screw bearing
- 31a: fitting insertion hole
- 31b: female screw part
- 32: screw drive member
- 32a: plate-like part
- 32b: male screw part
- 33: transmission mechanism (feed screw mechanism)
- 34: ball-like joint
- 35a: ball
- 35b: ball receiving seat
- 36: spring receiving member
- 37: compression coil spring
- 38: output shaft
- 38a: fitting groove
- 39: gear case
- 40: can (sealed container)
- 41: electric motor (stepping motor)
- 42: stator
- 43: rotor
- 43a: rotor member
- 44: rotor support shaft
- 45: support member
- 45: yoke
- 47: bobbin
- 48: coil
- 49: sun gear member
- 49a: sun gear
- 50: planetary gear
- 51: ring gear (internal tooth fixing gear)
- 52: internal tooth gear
- 53: shaft
- 54: carrier
- 55: output gear
- 56: speed reduction mechanism (paradox planetary gear speed reduction mechanism)
- 57: resin molded cover
- 57a: cylindrical leg part

## Claims

1. An electrically operated valve comprising:
a valve main body which has a valve chamber communicating with an inflow passage and an outflow passage in an inner part thereof;
a valve body which moves forward and backward with respect to a valve seat formed within the valve chamber;
a can which rotatably accommodates a rotor included in an electric motor driving the valve body; and
a connection member which connects the can and the valve main body,
wherein the valve main body has in a top surface thereof a connection opening which allows the connection member to be fitted,
wherein the connection opening has in a bottom part thereof a step part which allows the connection member to be butted against when the connection member is fitted to the connection opening,
wherein the connection member comprises:
a tubular fitting part which is fitted to the connection opening; and
a flange part which is formed in such a manner as to bend toward the center of the connection member from a bottom end part of the fitting part,
wherein the fitting part has in an outer peripheral surface thereof a male screw which is screwed into a female screw formed in an inner peripheral surface of the connection opening, and
wherein a base end part of the flange part butts against the step part when the fitting part is fitted to the connection opening.

2. The electrically operated valve according to claim 1, wherein a ring-shaped seal member is provided within the connection opening in such a manner as to be interposed between the fitting part and the valve main body.

3. The electrically operated valve according to claim 2, wherein the female screw is formed at a position which is farther from the bottom part of the connection opening than the seal member, with regard to a depth direction of the connection opening, and the male screw is arranged at a position which is farther from the bottom part of the connection opening than the seal member when the fitting part is fitted to the connection opening.

4. The electrically operated valve according to any one of claims 1 to 3, wherein the connection member is a pressed component which is formed by the press working.
